# EUROPÄISCHE PATENTSCHRIFT

(11) **EP 2 355 916 B1**
(45) Veröffentlichungstag und Bekanntmachung des Hinweises auf die Patenterteilung: **07.08.2013**
(21) Anmeldenummer: 09756466.0
(22) Anmeldetag: 16.11.2009
(51) Int. Cl.: B01D 46/24, B01D 46/00

(54) **ANSAUGLUFTFILTER FÜR VERBRENNUNGSKRAFTMASCHINEN**
INTAKE AIR FILTER FOR INTERNAL COMBUSTION ENGINES
FILTRE POUR L'AIR D'ADMISSION DE MOTEURS À COMBUSTION INTERNE

(30) Priorität: 20.11.2008 DE 202008015440 U
(43) Veröffentlichungstag der Anmeldung: 17.08.2011
(60) Teilanmeldung: 13165489.9
(73) Patentinhaber: MANN+HUMMEL GmbH, 71638 Ludwigsburg (DE)
(72) Erfinder: RIEGER, Mario, 71691 Freiberg (DE); BLOSSEY, Werner, 71726 Benningen (DE); SCHULDT, Joachim, 67071 Ludwigshafen (DE)
(86) Internationale Anmeldenummer: PCT/EP2009/065209
(87) Internationale Veröffentlichungsnummer: WO 2010/057843

(56) Entgegenhaltungen:
- EP-A1- 1 216 743
- WO-A2-2008/045326
- US-A1- 2005 028 500
- US-A1- 2006 254 229

## Beschreibung

### Technisches Gebiet

Die Erfindung betrifft einen Ansaugluftfilter für Verbrennungskraftmaschinen nach dem Oberbegriff des Anspruchs 1.

### Stand der Technik

Aus der EP 1 201 289 ist ein Ansaugluftfilter bekannt, welcher über ein zweiteiliges Gehäuse mit einem Hauptfilterelement und einem Sekundärfilterelement verfügt. An dem Gehäuse sind ein Einlass für zu reinigende Luft und ein Auslass für gereinigte Luft angeordnet. Das Sekundärfilterelement ist an einer Stirnseite derart mit dem Auslass verbunden, dass bei einem Wechsel oder Fehlen des Hauptfilterelements keine Verunreinigungen in den Auslass gelangen. An der anderen Stirnseite stützt sich das Sekundärelement in axialer Richtung an dem Hauptfilterelement ab. Hierbei kann es zu radialen Relativbewegungen zwischen dem Hauptfilterelement und dem Sekundärfilterelement kommen. Durch diese Relativbewegungen kann die Befestigung an dem Auslass gelockert werden oder es kann zu Beschädigungen an den Filterelementen kommen.

Die EP1216743A1 offenbart ein Filtersystem für die Ansaugluft von Brennkraftmaschinen. Das Filtersystem besitzt ein ovales Filterelement, welches in einem Gehäuse angeordnet ist, und einen Vorabscheider. Es kann ein Sicherheitsfilter vorgesehen sein.

In der US2006/254229 wird ein Luftfiltersystem mit einem austauschbaren Luftfilterelement und einem Gehäuse beschrieben. Das Gehäuse verfügt über einen Ring, der zumindest teilweise in eine Nut im Filterelement eingreift.

Der Erfindung liegt die Aufgabe zugrunde, Relativbewegungen zwischen dem Hauptfilterelement und dem Sekundärelement zu verhindern.

Diese Aufgabe wird durch die Merkmale des Anspruches 1 gelöst.

### Offenbarung der Erfindung

Der erfindungsgemäße Ansaugluftfilter dient der Reinigung von Luft für Verbrennungskraftmaschinen. Derartige Ansaugluftfilter können bei stationären oder mobilen Maschinen, insbesondere bei Fahrzeugen eingesetzt werden. Der Ansaugluftfilter verfügt über ein öffenbares Gehäuse mit einem Einlass für zu reinigende Luft und einem Auslass, durch welchen die gereinigte Luft aus dem Ansaugluftfilter ausströmen und zu der Verbrennungskraftmaschine gelangen kann. Bei vorteilhaften Ausgestaltungen ist das Gehäuse drei oder mehrteilig ausgeführt, um einfache Formen realisieren zu können. Diese Teile sind dann z.B. im Kunststoff-Spritzgussverfahren einfach herstellbar. Die einzelnen Teile des Gehäuses können lösbar oder unlösbar miteinander verbunden sein, wobei zumindest ein Teil lösbar mit den übrigen Teilen verbunden ist, um einen Filterelementwechsel durchführen zu können. Vorteilhafte Verbindungsarten der Teile stellen z.B. Verschraubungen, Verklipsungen, Verschweißungen oder Verklebungen dar, die einfach und kostengünstig erzeugt werden können.

Zwischen dem Einlass und dem Auslass ist ein ringförmig geschlossenes Hauptfilterelement angeordnet, welches einen beliebigen Querschnitt, z.B. kreisringförmig oder oval, aufweisen kann. Weiterhin kann das Hauptfilterelement zylindrisch oder konisch ausgebildet sein. Das Hauptelement verfügt über ein Filtermedium, welches zur Reinigung von Luft geeignet ist. Derartige Filtermedien können z.B. Filterpapiere mit Zellulose, Filtervliese aus synthetischen Fasern oder andere geeignete Materialien sein, wobei die Filtermedien ein- oder mehr-lagig, plissiert oder gewickelt ausgeführt sein können. Dem Hauptfilterelement ist ein Sekundärelement in Strömungsrichtung nachgeordnet, wobei das Sekundärelement dichtend mit dem Auslass verbunden ist. Hierzu kann das Sekundärelement mit dem Auslass z.B. verschraubt, verspannt oder verschnappt sein. Auf der, dem Auslass gegenüberliegend angeordneten Stirnseite des Sekundärelements ist eine Zentriervorrichtung vorgesehen, welche in radialer Richtung die Lage des Sekundärelements innerhalb des Hauptelements fixiert, indem sie Radialbewegungen verhindert. Hierzu kann die Zentriervorrichtung z.B. durch radial nach außen ragende Nasen am Außenumfang des Sekundärelements gebildet werden, welche mit einer entsprechenden Gegenkontur am Innenumfang des Hauptfilterelements korrespondieren. Weiterhin kann die Zentriervorrichtung bei einer anderen Ausgestaltung auch zentral im Bereich einer Bauteil-Mittelachse angeordnet sein.

Durch Fertigungstoleranzen oder Temperaturausdehnungen kann es in axialer Richtung zu Längenunterschieden der Sekundärelemente und Hauptfilterelemente kommen. Zur Vermeidung von unerwünschten Spannungen in Längsrichtung, verfügt die Zentriervorrichtung in axialer Richtung über einen Längenausgleich. Somit werden einerseits Radialbewegungen, welche zu einem unkontrollierten Lösen des Sekundärelements führen können verhindert, und andererseits Axialbewegungen, die zu Spannungen und Beeinträchtigungen der Filterelemente führen können, zugelassen.

Das Hauptfilterelement verfügt an seiner dem Auslass gegenüber angeordneten Stirnseite über einen fluiddichten Boden, welcher z.B. durch Polyurethan-Schaum gebildet sein kann. Weiterhin kann der Boden aus einem formstabilen Material wie z.B. einem Metallblech oder einer Kunststoffscheibe bestehen und mit einem Kleber dichtend mit dem Filtermedium verbunden sein. Somit kann auf weitere Dichtmittel zur Trennung des Einlasses von dem Auslass verzichtet werden. An dem Boden ist die Zentriervorrichtung angeordnet. Hierbei kann ein Teil der Zentriervorrichtung einstückig an den Boden angeformt oder als gesondert ausgeführtes Bauteil lösbar oder unlösbar mit dem Boden verbunden sein. Lösbare Verbindungen können z.B. durch Stecken, Klipsen oder Schrauben erzeugt sein. Unlösbare Verbindungen zwischen dem Boden und der Zentriervorrichtung können z.B. durch Kleben oder Schweißen gebildet werden. Durch die Anordnung der Zentriervorrichtung an dem Boden wird erreicht, dass das Sekundärelement über zwei von einander beabstandete Lagerstellen verfügt, welche das Sekundärelement optimal stützen und so ungewünschte Bewegungen verhindern. Weiterhin erübrigen sich aufwendige Konturen zur Lagerung des Sekundärelements im Gehäuse.

Die Zentriervorrichtung verfügt über eine Aufnahmevorrichtung, welche als Aufnahmekrone mit verteilt angeordneten Stegen ausgebildet ist. Die Stege der Aufnahmekrone federn bei der Montage des Gegenstücks leicht auseinander und ermöglichen so eine spielfreie Lagerung des Gegenstücks in der Aufnahmekrone.

Bei einer Ausgestaltung der Erfindung verfügt das Sekundärelement an seiner dem Auslass gegenüberliegenden Stirnseite über eine fluiddichte Abdeckung, an welcher ein Teil der Zentriervorrichtung angeordnet ist. Diese Abdeckung kann entsprechend dem oben beschriebenen Boden des Hauptfilterelements ausgestaltet sein. Durch die Anordnung der Zentriervorrichtung an der Abdeckung korrespondieren benachbarte Bauteile und ermöglichen einfache Geometrien im Gehäuse.

Es ist vorteilhaft, dass das Hauptfilterelement über ein Stützrohr aus einem formbeständigen Material, insbesondere einem thermoplastischen Kunststoff, verfügt. Das Stützrohr weist eine Vielzahl von Luftdurchlässen auf und erzeugt somit keinen nennenswerten Druckverlust für die durchströmende Luft. Da das Stützrohr auf der Abströmseite des Filtermediums angeordnet ist, kann verhindert werden, dass das Filtermedium von der durchströmenden Luft deformiert wird. Der fluiddichte Boden ist vorteilhafter weise an das Stützrohr angeformt, wodurch die oben beschriebene Funktion des Bodens in das zur Filtermediumsabstützung erforderliche Stützrohr integriert ist. Durch die Funktionsintegration kann die Anzahl der Bauteile reduziert werden. Weiterhin erübrigen sich zusätzliche Verbindungsstellen zwischen Boden, Filtermedium und Stützrohr.

Eine weitere Ausgestaltung der Erfindung sieht vor, dass das Sekundärelement über einen Stützkörper verfügt, an welchen die Abdeckung angeformt ist. Die Ausführungen zu dem Stützrohr des Hauptfilterelements gelten in gleicher Weise für den Stützkörper des Sekundärelements.

Gemäß einer vorteilhaften Ausführung verfügt die Zentriervorrichtung über eine als Zapfen ausgeführte Einschubvorrichtung, welche das Gegenstück der Aufnahmevorrichtung bildet. Hierbei kann der Zapfen als starres Element ausgeführt sein und in die oben beschriebene Aufnahmekrone eingesetzt werden. Bei anderen Ausführungen kann der Zapfen auch aus einem elastischen Material bestehen und als kompressibles Element ausgeführt sein. Somit ist eine spielfreie Lagerung des Sekundärelements in dem Hauptfilterelement möglich.

### Kurze Beschreibung der Zeichnungen

Die Erfindung wird nachfolgend anhand von Ausführungsbeispielen näher erläutert. Hierbei zeigt:
Figur 1 einen Ansaugluftfilter im Schnitt mit einer von den Patentansprüchen nicht umfassten Ausgestaltung einer Zentriervorrichtung und
Figur 2 einen Ausschnitt des Ansaugluftfilters in einer alternativen von den Patentansprüchen umfassten Ausgestaltung.

### Ausführungsform(en) der Erfindung

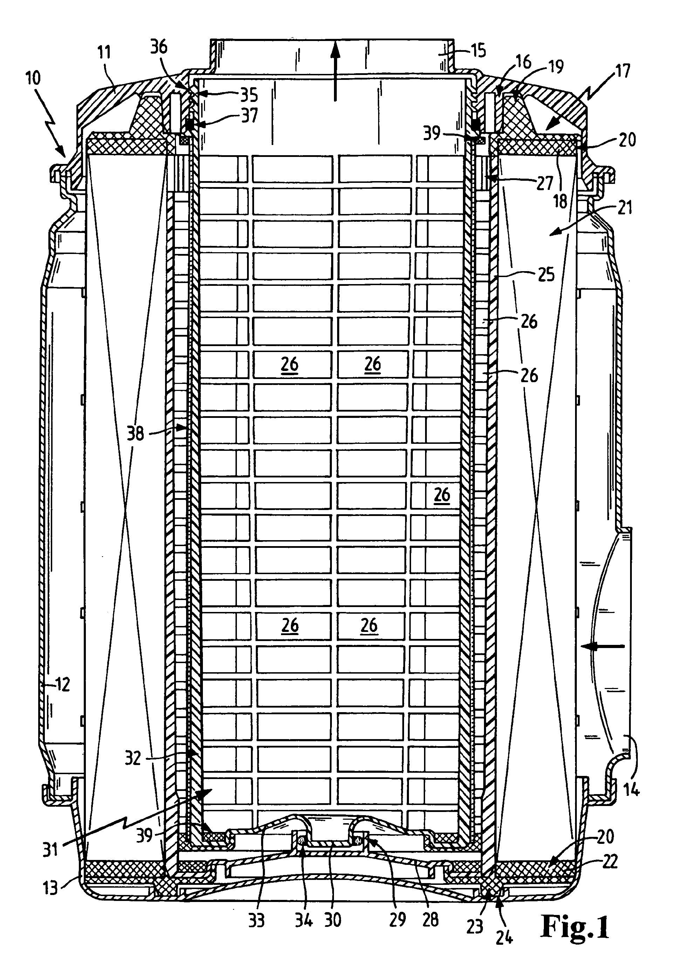

In Figur 1 ist ein Ansaugluftfilter im Schnitt dargestellt. Der Ansaugluftfilter verfügt über ein öffenbares Gehäuse 10, welches aus einem thermoplastischen Kunststoff besteht. Bei diesem Ausführungsbeispiel ist das Gehäuse 10 durch einen Deckel 11, ein Mittelteil 12 und einen Topf 13 gebildet. Durch die mehrteilige Ausführung des Gehäuses 11 verfügen die Einzelteile 11, 12, 13 über eine einfachere Geometrie und sind somit einfacher und preiswerter herstellbar. Der Deckel 11 ist fest mit dem Mittelteil 12 verschweißt und bildet so eine bauliche Einheit. Der Topf 13 ist lösbar mit dem Mittelteil 12 verbunden, wobei zur Befestigung der Teile 12, 13 aneinander z.B. Spannbügel (nicht dargestellt) oder ähnliches verwendet werden können. Das Mittelteil 12 weist einen Einlass 14 auf, durch welchen zu reinigende Luft in das Gehäuse 10 einströmt. Der Deckel 11 verfügt über einen Auslass 15, welcher stutzenförmig nach außen ragend an den Deckel 11 angeformt ist. Die Innenkontur des Deckels 11 weist einen zylindrisch umlaufenden Dichtungskragen 16 auf, auf welchen ein Hauptfilterelement 17 mit seiner stirnseitig angeordneten ersten Endscheibe 18 dichtend aufgesteckt ist. Die Endscheibe 18 besteht aus einem kompressiblen Polyurethan-Schaum, welcher einen Dichtungswulst 19 und einen Scheibenbereich 20 bildet. Der Dichtungswulst 19 korrespondiert radial dichtend den Dichtungskragen 16. In axialer Richtung kontaktiert der Dichtungswulst 19 die Stirnseite des Deckels 11. In den Scheibenbereich 20 ragt ein plissiertes, ringförmig geschlossenes Filtermedium 21, welches stirnseitig dichtend in den Scheibenbereich 20 eingeschäumt ist. An der gegenüberliegenden Stirnseite des Filtermediums 21 ist eine zweite Endscheibe 22 aus Polyurethan-Schaum angeordnet, welche ebenfalls einen Scheibenbereich 20, wie oben beschrieben, aufweist. An den Scheibenbereich 20 ist ein Stützwulst 23 angeformt, welcher ringförmig umlaufend oder in mehrer Teilsegmente unterteilt ausgeführt sein kann. Der Stützwulst 23 wird axial in dem Gehäuse 10 verpresst, wodurch axiales Spiel des Hauptfilterelementes 17 in dem Gehäuse 10 verhindert wird. Dieser Stützwulst 23 ragt bei geschlossenem Top13 in eine ringförmige Aufnahme 24 und reduziert so Schwingungen des Filterelements 17 im Gehäuse 10. Im Inneren des Filtermediums 21 ist ein Stützrohr 25 angeordnet, welches über eine Vielzahl von fensterförmigen Durchlässen 26 verfügt. Das Stützrohr 25 weist an seiner ersten Stirnseite einen geschlitzten Endbereich 27 auf, welcher von dem Scheibenbereich 20 stirnseitig umschlossen ist. Somit verfügt das Hauptfilterelement 17 über eine ausreichende Radialelastizität, um auf den Dichtungskragen 16 aufgesteckt werden zu können. Auf der gegenüberliegenden Stirnseite verfügt das Stützrohr 25 über einen geschlossenen, leicht nach innen gewölbten Boden 28. Auf der nach Innen ragenden Seite des Bodens 28 ist eine topfförmige Aufnahmewand 29 angeordnet. In diese Aufnahmewand 29 ragt ein Zapfen 30 eines innerhalb des Hauptfilterelementes 17 angeordneten Sekundärelements 31 hinein. Dieses Sekundärelement 31 verfügt über einen Stützkörper 32, welcher, wie das Stützrohr 25 des Hauptfilterelements 17, über eine Vielzahl von rechteckigen Durchlässen 26 verfügt. Der Stützkörper 32 verfügt ebenfalls über eine fluiddichte Abdeckung 33, an welche der Zapfen 30 angeformt ist. Auf dem Zapfen 30 ist ein kompressibler Ring 34 angeordnet, welcher zur Schwingungsreduzierung zwischen dem Sekundärelement 31 und dem Hauptfilterelement 17 dient. Weiterhin wird die Montage der Zentriervorrichtung, welche aus dem Zapfen 30 und der Aufnahmewand 29 gebildet ist, durch den Ring 34 erleichtert. Die Höhe der Aufnahmewand 29 und Länge des Zapfens 30 ist derart ausgelegt, dass das Hauptfilterelement 17 den Dichtungskragen 16 kontaktiert, bevor der Zapfen 30 die Aufnahmewand 29 berührt. Erst wenn das Hauptfilterelement 17 weiter eingeschoben wird, kontaktiert der Zapfen 30 die Aufnahmewand 29. Um die Montage zu erleichtern kann entweder der Zapfen 30 oder die Aufnahmewand 29 eine Einführungsschräge (nicht dargestellt) aufweisen. Somit ist die Montage des Hauptfilterelements 17 erleichtert.

Auf der dem Zapfen 30 gegenüberliegenden Stirnseite des Stützkörpers 32 ist ein Befestigungsgewinde 35 angeordnet, welches in ein entsprechendes Gegengewinde 36 am Gehäuse eingeschraubt ist. Zur Abdichtung zwischen dem Sekundärelement 31 und dem Deckel 11 ist ein O-Ring 37 vorgesehen, welcher sich auf einer Fläche des Gegengewindes 36 abstützt. Das Sekundärelement 31 verfügt weiterhin über ein Filtervlies 38, welches den Bereich der Durchlässe 26 abdeckt und im Bereich der Stirnseiten mittels eines Klebers 39 auf de Stützkörper 32 befestigt ist. Alternativ zu der Verklebung kann das Filtervlies 38 auch dichtend mit dem Stützkörper 32 verschweißt oder z.B. mit PUR-Schaum eingeschäumt sein. Weiterhin können sich die Befestigungsarten des Filtervlieses 38 auf den beiden Stirnseiten unterscheiden. Hierbei sind belleblge Kombinationen der Befestigungsarten der unterschiedlichen Stirnseiten möglich, wodurch das Filtervlies 38 auf einer Stirnseite z.B. geschweißt und an der anderen Stirnseite z.B. geklebt wird.

Zur Reinigung der Ansaugluft der Verbrennungskraftmaschine strömt die ungereinigte Luft in Pfeilrichtung in den Einlass 14 ein und verteilt sich um das Hauptfilterelement 17. Durch die in dem Ansaugluftfilter herrschenden Druckverhältnisse tritt die Luft durch das Filtermedium 21 hindurch, wobei die in der Luft enthaltenen Partikel an dem Filtermedium abgeschieden werden. Die gereinigte Luft strömt durch die Durchlässe 26 hindurch zu dem Sekundärelement 31. In der gereinigten Luft sind keine weiteren abzuscheidenden Partikel enthalten, somit tritt die Luft durch das Filtervlies 38 und den Stützkörper 32 hindurch. Von dem Innenvolumen des Sekundärelements 31 strömt die Luft in Pfeilrichtung durch den Auslass 15 aus dem Ansaugluftfilter hinaus in Richtung der Verbrennungskraftmaschine.

Bei einem Wechsel des Hauptfilterelementes 17, wird zunächst der Topf 13 von dem Mittelteil 12 getrennt. Das Hauptfilterelement 17 kann anschließend mit der Hand abgezogen werden, wobei der Zapfen 30 aus der Aufnahmewand 29 gezogen und der Dichtungswulst 19 von dem Dichtungskragen 16 entfernt wird. Das Sekundärelement 31 bleibt an dem Deckel 11 verschraubt, somit können keine Verunreinigungen zu dem Auslass 15 gelangen. Beim Einsetzen eines neuen Hauptfilterelementes 17 wird der Dichtungswulst 19 wieder teilweise auf den Dichtungskragen 16 geschoben, bevor der Zapfen 30 in die Aufnahmewand 29 eintaucht. Nachdem das Hauptfilterelement 17 wieder vollständig auf den Dichtungskragen 16 aufgeschoben und der Zapfen 30 in der Aufnahmewand 29 zentriert ist, kann der Topf 13 wieder mit dem Mittelteil 12 verbunden werden.

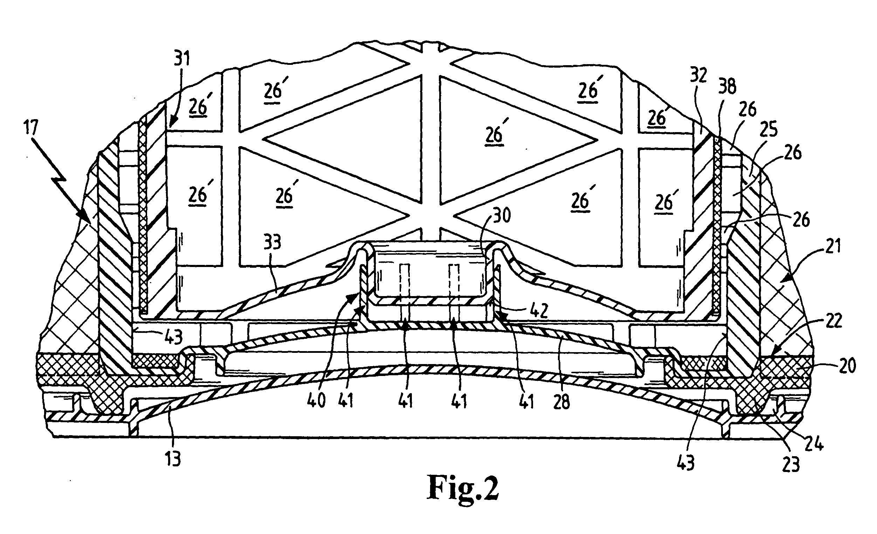

In Figur 2 ist ein Ausschnitt des Ansaugluftfilters in einer alternativen Ausgestaltung dargestellt. Gleiche Bauteile sind mit gleichen Bezugszeichen versehen. Im Unterschied zu Figur 1 weist der Stützkörper 32 im Wesentlichen dreieckförmige Durchlässe 26' auf. Weiterhin ist an dem Zapfen 30 des Stützkörpers kein zusätzlicher Ring 34 angeordnet. Weiterhin ist das Filtervlies 38 ohne zusätzliche Komponenten mit dem Stützkörper 32 verschweißt. Das Hauptfilterelement 17 verfügt an seinem Boden 28 über eine Aufnahmekrone 40, welche aus einzelnen Stegen 41 gebildet wird. Diese Stege 41 federn ab einem definierten Druck auseinander und ermöglichen so die Aufnahme des Zapfens 30. Hierbei gleitet dann der harte Kunststoff des Zapfens 30 auf den Stegen 41, welche ebenfalls aus einem formbeständigen Kunststoff bestehen. Zur leichteren Montage verfügt der Zapfen 30 über eine Einführungsschräge 42, welche z.B. als Fase oder Rundung ausgeführt sein kann. Das Stützrohr 25 des Hauptfilterelements 17 weist in seinem stirnseitennahen Bereich Leitrippen 43 auf, welche eine Grobzentrierung des Sekundärelements 31 in dem Hauptfilterelement 17 bewirken und somit die Montage erleichtert wird. Der Zapfen 30 hat in axialer Richtung ausreichend Spiel in der Aufnahmekrone 40, dass ein Längenausgleich erreicht wird und so Längstoleranzen oder Wärmeausdehnungen nicht zu Beschädigungen der Filterelemente 17, 31 führen.

Selbstverständlich können die einzelnen Teilaspekte der unterschiedlichen Ausführungsbeispiele in geeigneter Weise miteinander kombiniert werden. Weiterhin ist auch eine Umkehr der Geometrieanordnung von Zapfen und Aufnahme denkbar.

## Patentansprüche

1. Ansaugluftfilter für Verbrennungskraftmaschinen, insbesondere für Fahrzeuge, aufweisend ein öffenbares Gehäuse (10) mit einem Einlass (14) und einem Auslass (15), ein dichtend zwischen dem Einlass (14) und Auslass (15) angeordnetes, ringförmig geschlossenes Hauptfilterelement (17) und ein ringförmig geschlossenes Sekundärelement (31), welches dem Hauptfilterelement (17) in Strömungsrichtung nachgeordnet und dichtend mit dem Auslass (15) verbunden ist, **dadurch gekennzeichnet, dass** auf der dem Auslass (15) gegenüberliegenden Stirnseite zwischen dem Sekundärelement (31) und dem Hauptfilterelement (17) eine Zentriervorrichtung (29, 30, 40, 41, 42) vorgesehen ist, welche zur radialen Lagefixierung des Sekundärelements (31) innerhalb des Hauptfilterelements (17) vorgesehen ist, wobei das Hauptfilterelement (17) an seiner dem Auslass (15) gegenüberliegenden Stirnseite über einen fluiddichten Boden (28) verfügt, an welchem ein Teil der Zentriervorrichtung (29, 30, 40, 41, 42) angeordnet ist, wobei die Zentriervorrichtung (29, 30, 40, 41, 42) über eine Aufnahmevorrichtung (29) verfügt, welche als Aufnahmekrone (40) mit verteilt angeordneten Stegen (41) ausgebildet ist, wobei die Stege (41) der Aufnahmekrone (40) bei der Montage eines Gegenstücks (30) leicht auseinander federn und eine spielfreie Lagerung des Gegenstücks (30) in der Aufnahmekrone (40) ermöglichen.

2. Ansaugluftfilter nach Anspruch 1, **dadurch gekennzeichnet, dass** das Sekundärelement (31) an seiner dem Auslass (15) gegenüberliegenden Stirnseite über eine fluiddichte Abdeckung (33) verfügt, an welcher ein Teil der Zentriervorrichtung (29, 30, 40, 41, 42) angeordnet ist.

3. Ansaugluftfilker nach Anspruch 1 oder 2, **dadurch gekennzeichnet, dass** das Hauptfilterelement (17) über ein Stützrohr (25) verfügt, an welches der Boden (28) angeformt ist.

4. Ansaugluftfilter nach Anspruch 2 oder auf Anspruch 2 rückbezogenen Anspruch 3, **dadurch gekennzeichnet, dass** das Sekundärelement (31) über einen Stützkörper (32) verfügt, an welchen die Abdeckung (33) angeformt ist.

5. Ansaugluftfilter nach einem der vorangehenden Ansprüche, **dadurch gekennzeichnet, dass** die Zentriervorrichtung (29, 30, 40, 41, 42) über eine Einschubvorrichtung (30) verfügt, welche als Zapfen (30) ausgebildet ist.

6. Ansaugluftfilter nach einem der vorangehenden Ansprüche, **dadurch gekennzeichnet, dass** die Zentriervorrichtung (29, 30, 40, 41, 42) in axialer Richtung über einen Längenausgleich verfügt.

## Claims

1. Intake air filter for internal combustion engines, in particular for vehicles, featuring an openable housing (10) with an inlet (14) and an outlet (15), an annular closed main filter element (17) sealingly disposed between the inlet (14) and the outlet (15) and an annularly closed secondary element (31) which is located downstream of the main filter element (17) in flow direction and sealingly connected with the outlet (15), **characterized in that** on the front face opposing the outlet (15) between the secondary element (31) and the main filter element (17) a centering device (29, 30, 40, 41, 42) is provided, which is provided for the radial fixing of the position of the secondary element (31) inside of the main filter element (17), the main filter element (17) having on its front face opposing the outlet (15) a fluid-tight bottom (28), on which one part of the centering device (29, 30, 40, 41, 42) is disposed, the centering device (29, 30, 40, 41, 42) having a reception device (29) which is designed as receiving crown (40) with dispersedly arranged ribs (41), the ribs (41) of the receiving crown (40) slightly moving apart when mounting a counter member (30) and allowing a bearing free from backlash of the counter member (30) in the receiving crown (40).

2. Intake air filter according to claim 1, **characterized in that** the secondary element (31) has on its front face opposing the outlet (15) a fluid-tight cover (33), on which a part of the centering device (29, 30, 40, 41, 42) is disposed.

3. Intake air filter according to claim 1 or 2, **characterized in that** the main filter element (17) has a support tube (25), to which the bottom (28) is integrally molded.

4. Intake air filter according to claim 2 or claim 3 referred back to claim 2, **characterized in that** the secondary element (31) has a support structure (32), to which the cover (33) is integrally molded.

5. Intake air filter according to one of the above claims, **characterized in that** the centering device (29, 30, 40, 41, 42) has an insertion device (30) which is designed as dowel (30).

6. Intake air filter according to one of the above claims, **characterized in that** the centering device (29, 30, 40, 41, 42) has a length compensation in axial direction.

## Revendications

1. Filtre à air d'aspiration pour machines à combustion interne, en particulier pour véhicules, présentant un boîtier ouvrable (10) avec une entrée (14) et une sortie (15), un élément filtrant principal (17) fermé de manière annulaire et disposé de manière étanche entre l'entrée (14) et la sortie (15) et un élément secondaire (31) fermé de manière annulaire monté dans le sens du flux en aval de l'élément filtrant principal (17) et relié de manière étanche à la sortie (15), **caractérisé en ce qu'**un dispositif de centrage (29, 30, 40, 41, 42) est prévu, sur la face frontale opposée à la sortie (15), entre l'élément secondaire (31) et l'élément filtrant principal (17) et sert à fixer la position radiale de l'élément secondaire (31) à l'intérieur de l'élément filtrant principal (17), l'élément filtrant principal (17) disposant, sur sa face frontale opposée à la sortie (15), d'un fond (28) étanche aux fluides sur lequel est disposé une partie du dispositif de centrage (29, 30, 40, 41, 42), le dispositif de centrage (29, 30, 40, 41, 42) étant doté d'un dispositif de réception (29) qui est exécuté en tant que couronne de réception (40) avec des nervures (41) réparties, les nervures (41) de la couronne de réception (40) s'écartant légèrement lors du montage d'un contre-élément (30) et permettant de réaliser un logement sans jeu du contre-élément (30) dans la couronne de réception (40).

2. Filtre à air d'aspiration selon la revendication 1, **caractérisé en ce que** l'élément secondaire (31) dispose, sur sa face frontale opposée à la sortie (15), d'un recouvrement (33) étanche aux fluides sur lequel est disposée une partie du dispositif de centrage (29, 30, 40, 41, 42).

3. Filtre à air d'aspiration selon la revendication 1 ou 2, **caractérisé en ce que** l'élément filtrant principal (17) dispose d'un tube de soutien (25) sur lequel est moulé le fond (28).

4. Filtre à air d'aspiration selon la revendication 2 ou la revendication 3 faisant référence à la revendication 2, **caractérisé en ce que** l'élément secondaire (31) dispose d'un élément d'appui (32) sur lequel est moulé le recouvrement (33).

5. Filtre à air d'aspiration selon l'une des revendications précédentes, **caractérisé en ce que** le dispositif de centrage (29, 30, 40, 41, 42) est doté d'un dispositif d'introduction (30) qui est exécuté en tant que pivot (30).

6. Filtre à air d'aspiration selon l'une des revendications précédentes, **caractérisé en ce que** le dispositif de centrage (29, 30, 40, 41, 42) dispose en sens axial d'un compensateur de longueur.
